# EUROPEAN PATENT APPLICATION

(11) **EP 4 657 619 A1**
(43) Date of publication of application: **03.12.2025**
(21) Application number: 24178313.3
(22) Date of filing: 27.05.2024
(51) Int. Cl.: H01M 50/148, H01M 50/15, H01M 50/308, H01M 50/367

(54) **BAFFLE PLATE**

(71) Applicant: Volvo Car Corporation, 405 31 Göteborg (SE)
(72) Inventor: ANDERSSON, Erik, SE-405 31 Göteborg (SE)
(74) Representative: Nederlandsch Octrooibureau

(57) **Abstract**

A baffle plate for controlling fluid flow through a vent located on a wall section, the baffle plate comprising a back plate, a side wall extending from the back plate on at least two sides, and an outer rim at a distal portion of the side wall, wherein the baffle plate is arranged to connect to the wall section in such a way that the baffle plate at least partly covers the vent, and wherein the side wall is configured such that there is an opening between the outer rim and the wall section when a part of the outer rim connects to the wall section.

## Description

### TECHNICAL FIELD

The disclosure relates to a baffle plate for controlling fluid flow through a vent. The disclosure further relates to a gas exhausting arrangement for a battery enclosure comprising the baffle plate. Further, the disclosure relates to a battery enclosure comprising the gas exhausting enclosure. Furthermore, the disclosure relates to a vehicle comprising the battery enclosure. Yet further, the disclosure relates to a method of removing exhaust gas using the gas exhausting arrangement.

### BACKGROUND ART

With the advancement in technology of hybrid and electric vehicles, the energy content (or energy stored) in a battery of a vehicle is relatively higher than in a conventional gasoline or diesel vehicle. A battery is an important component in an automobile which provides electrical power for starting the engine, operating the lights, and facilitates the functioning of various other electrical accessories. Basic elements of the battery include two electrodes located in one or more modules, and the modules are located in a battery enclosure. The battery collectively refers to the battery enclosure and the one or more modules within the enclosure. The battery may typically be placed or integrated inside the trunk or the hood of a vehicle, such as an automobile.

During operation of the battery i.e., the charging and/or discharging of the battery, a chemical reaction is carried out at the electrodes of the battery. Consequently, this results in the release of particle-laden gaseous exhaust. That is, the exhaust may comprise gas, and (also) particles carried by the gas. The exhaust is relatively hot compared to the temperature of other components within the battery enclosure and/or other components within the trunk or the hood of the automobile. Furthermore, the exhaust is ejected from the modules comprising the electrodes at a relatively high pressure and velocity.

The exhaust gas increases the pressure within the battery enclosure, which in some cases could lead to undesirable side effects, such as deforming the battery enclosure, leakage of chemicals and/or damage to the enclosure. Moreover, the hot particles in the exhaust could damage the modules within the battery enclosure. Furthermore, thermal runaway could occur in batteries where the battery module temperature increases rapidly leading to a chain reaction of overheating. Once started, the thermal runaway may cause the adjacent modules to overheat, exacerbating the problem. In a highly adverse situation, hot particles when mixed with air can generate undesired sparks. Sparks comprising high temperature particulate matter may impinge/impact other components in the vicinity of the battery, which in severe cases could result in significant damage to said components. For instance, a high temperature particle could potentially impact a component which could result in an ignition of combustible material. Additionally, an adverse pressure build-up within the battery enclosure could even lead to rupturing of (a part of) the battery enclosure leading to spilling (or spreading) of corrosive compounds over the other components in the vicinity of the battery in very serious cases. Hence, it is desired to exhaust the gas produced from the battery enclosure while at the same time it also desired to remove or separate relatively hot particles from the exhaust gas.

Prior art systems use a filter to separate hot particles above a predetermined particle diameter, or alternatively use particle traps to capture particles of a predetermined size. In some cases, the filters or traps used may get clogged due to the accumulation of particles, resulting in a reduced mass flow rate of the exhaust gas (i.e., the exhaust gas expelled per unit time). This will lead to the amount of gas exhausted from the battery enclosure being limited leading to adverse pressure buildup within the battery enclosure. Additionally, the filters or traps can become damaged as a result of being impinged by hot particles, in some cases resulting in hot particles being ejected at high velocity external to the battery enclosure, for example into the hood or underneath of the vehicle.

### SUMMARY OF INVENTION

The present disclosure aims to provide an element, or an arrangement, or a battery enclosure that overcomes the drawbacks of the prior art.

According to a first aspect, a baffle plate for controlling fluid flow through a vent located on a wall section comprises a back plate, a side wall extending from the back plate on at least two sides, and an outer rim at a distal portion of the side wall. The baffle plate is arranged to connect to the wall section in such a way that the baffle plate at least partly covers the vent, and the side wall is configured such that there is an opening between the outer rim and the wall section when a part of the outer rim connects to the wall section.

With such a baffle plate configured upstream of the vent (relative to the flow of exhaust gas), (i) a part of the exhaust gas flow may impinge the baffle plate, and (ii) a part of the exhaust gas flow may be guided around the baffle plate to the vent. Typically, the exhaust gas flow may be turbulent. The turbulent kinetic energy of the flow may be sufficient to overcome gravity and transport particles along with the exhaust gas flow. However, when the exhaust gas flow impacts the baffle plate or the exhaust gas flow is guided around the baffle plate, a significant portion of this energy is used in redirecting the flow around the obstruction (i.e., the baffle plate). As a consequence, the flow velocity is significantly reduced and there is insufficient energy available to transport the particles along with the flow. This causes the hot particles in the flow to settle under gravity and be separated from the flow. In this way, exhaust gas may be removed via the vent without a significant reduction in the flow rate. Further, the hot particles may be separated at a region away from the vent thus protecting the vent.

Furthermore, when a hot particle approaches the baffle plate, the kinetic energy of the particle is dissipated either due to collision or lubrication with the baffle plate. When a particle collides with the baffle plate, the particle may be reflected in a direction no longer aligned with the direction of the exhaust gas flow. In this way, the particle may be knocked out of the exhaust gas flow. Additionally or alternatively, as the particle approaches the baffle plate, the exhaust gas between the particle and the baffle plate is lubricated i.e., the exhaust gas (between the particle and the baffle plate) is squeezed out in a direction perpendicular to the direction of approach of the particle. Both of these scenarios decrease the kinetic energy of the particle, eventually causing the particle to settle under the influence of gravity. This provides the benefit of keeping the hot particles contained within the battery enclosure as opposed to ejecting the said particles external to the battery enclosure. Thus preventing any inadvertent damage to the other components in the vicinity of the battery, such as engine components, fuel systems, electrical systems, exhaust systems, etc. Particularly, such a baffle plate avoids damage due to the ejection of hot particulate matter. Furthermore, the particles having lost their kinetic energy upon impacting the baffle plate may no longer cause impact damage to the vents within the battery enclosure. The particles settled at the bottom of the battery enclosure dissipate heat and cool down, preventing any further thermal damage to the components within the battery enclosure.

In embodiments, the baffle plate may be arranged in consideration of the wall section. Here, the wall section may refer to a part of the wall of the battery enclosure. The baffle plate (in combination with the wall section) may facilitate controlling or guiding the fluid (or "exhaust gas") flow through a vent located on the wall section.

As mentioned above, the baffle plate may comprise a back plate and a side wall. The wall section, the back plate and the side wall together define the exit flow geometry i.e., the boundaries of the space accessible to the fluid in the vicinity of the vent. By the careful selection of the geometry of the baffle plate (in view of the geometry of the wall section), the fluid flow within the exit flow geometry may be controlled.

To this end, the side wall extends from the back plate on at least two sides, a first side wall and a second side wall. As mentioned above, the baffle plate may comprise at least two sides. Here, the term "a side of the side wall" refers to a part of the baffle plate that extends away from the back plate. In this context a part of the boundary of the side wall is shared with a part of the back plate. The side wall may extend in a plane parallel to the back plate, and/or alternatively may also be bent at the shared boundary (relative to the plane of the back plate).

Further, the baffle plate comprises an outer rim at a distal portion of the side wall. However, in an embodiment where there are parts of the backplate where no side wall is defined, the distal portion of the back plate may (also) comprise the outer rim. For example, the baffle plate comprising the side wall that extends only on two sides has the outer rim defined at the boundaries of said sides and at the boundaries of the back plate.

It will be apparent to the skilled person that the baffle plate is not limited to rectangular shapes and may comprise fewer or more than four sides, such as a five-sided or a six sided baffle plate, or a round or oval configuration. In such embodiments, the side wall may extend from the back plate on three sides, or four sides, or more.

In embodiments, the baffle plate may have a planar geometry. The term "planar" does not imply that the baffle plate is strictly flat (or defined only in a flat plane), rather that the baffle plate has a substantially smaller thickness compared to a length and a width of the baffle plate. The back plate may also be curved or comprise bends (configured to control the fluid flow within the exit flow geometry).

The baffle plate may be arranged to be "connected" to the wall section. Here, the term "connected" could refer to "being in contact" or "being attached to". That is, at least a part of the outer rim of the baffle plate may be in contact with or attached to the wall section. In an embodiment, at least a part of the outer rim may be attached to the wall section. For example, the outer rim may be joined to the wall section using an adhesive or welded to the wall section. In an alternative embodiment, the outer rim may comprise fixtures that facilitate coupling or mounting the baffle plate to the wall section. For example, the outer rim may comprise fixing holes (e.g., screw holes or rivets) to secure the baffle plate to the wall section using screws or other coupling features such as clamps, bolts, etc. Alternatively, in other embodiments, the outer rim may be devoid of such features, and instead the back plate or the side wall (as opposed to the outer rim) may comprise fixtures that facilitate mounting (or connecting) the baffle plate to the wall section such as a groove and protrusions.

The side wall is configured such that there is an opening between the outer rim and the wall section when the part of the outer rim connects to the wall section. This provides the benefit that features or geometry of the wall section may be exploited to facilitate flow guiding. The skilled person may optimally define the position and the shape of the opening in view of defining the exit flow geometry e.g., in view of the baffle plate, the wall section and the internal construction of the battery enclosure.

In embodiments, the side wall may be configured such that there is an opening defined at the surface of the side wall away from the outer rim. Such an embodiment can provide the benefit of positioning the opening at an optimal location on the baffle plate for controlling the fluid flow.

Further, the baffle plate is arranged in such a way that the baffle plate at least partly covers the vent. That is, the vent may only be accessible via the opening. In a further embodiment, the baffle plate may (completely) surround the vent. That is, a projection of the baffle plate onto the plane comprising the vent opening would encompass (or surround) the vent opening. In this way, the baffle plate facilitates controlling the fluid flow by limiting access to the vent except via the opening (defined between the wall section and the outer rim). This helps to guide flow in from the sides, allowing for settling of particles. Energy is consumed as the flow curves around the baffle plate resulting in insufficient energy to overcome the gravitational force acting on the particles, leading to more particles settling out of the flow.

The vent is located on the wall section. The dimensions of the baffle plate may be selected with relation to the size of the vent, the pressure within the battery enclosure and/or the flow path of the exhaust gas. In an embodiment, the opening may have a maximum height H₁ measured in a perpendicular direction from a plane containing the opening to the vent. Further, the back plate may have a maximum length L₁ measured along the surface of the back plate. In embodiments, the maximum height of the opening may be defined in relation to the maximum length of the back plate, i.e., 0.02*L₁ ≤ H₁ ≤ 0.8*L₁ , preferably 0.03*L₁ ≤ H₁ ≤ 0.75*L₁, more preferably 0.05*L₁ ≤ H₁ ≤ 0.7*L₁. Such a backplate configuration is able to not adversely limit the mass flow rate of exhaust gas, while at the same time it also helps separate the hot particles from the flow. This is achieved by carefully selecting the size of the openings. The specific configuration and size of the opening provides sufficient space for the majority of the flow to circumnavigate the baffle plate, while avoiding an adverse pressure buildup. In specific embodiments, H₁ may be selected from the range of 8-30 mm, such as 10-25 mm, especially 12-20 mm.

In an embodiment, the side wall comprises a bottom wall. The bottom wall is configured such that the opening is defined between the outer rim and the wall section when part of the outer rim connects to the wall section. As mentioned above, the opening may be defined between the wall section and the outer rim defined at any part of the side wall. However, in the configuration where the opening is between the wall section and the outer rim bordering the bottom side wall, the exhaust gas flow carrying the particles may be flowed under the baffle plate to access the vent. Here, the exhaust gas flow must overcome the gravitational forces acting on the particles carried by the exhaust gas flow, resulting in more particles being separated from the exhaust gas flow and staying contained, for example, within the battery enclosure, to cool off and not interfere with other parts or systems.

In a further embodiment, the baffle plate may comprise more than one opening. As mentioned above, the side wall may comprise a first side wall. The first side wall may be configured such that there is a first side opening between the outer rim and the wall section when part of the outer rim connects to the wall section. Note that the first side wall is defined at a side different from the bottom wall. For example, the first side wall may be defined on a left side, or a right side, or a top side of a vertically mounted baffle plate. The first side opening is defined in addition to the opening (or "bottom opening") previously defined. The combination of the two openings may improve accessibility to the vent and additionally provide improved control over the fluid flow within the exit flow geometry. Moreover, there is additional space available via which the exhaust gas flow may access the vent (compared to only one opening), thus improving the mass flow rate of the exhaust gas expelled, and more exhaust gas may be expelled via the vent.

In some embodiments, the area of the bottom opening can be A₁ and the area of the first side opening can be A_{S1}, and A₁ > 2*A_{S1}, preferably A₁ > 3*A_{S1}, more preferably A₁ > 5*A_{S1}. The area is measured in a plane bounded by the outer rim at the side where the said opening is defined. Such a ratio can help to ensure that the bulk of the exhaust gas flow is transported via the bottom opening as opposed to the first side opening, thereby helping particles within the flow to settle and not exit the enclosure. Such areas and ratios are examples, and other embodiments could vary depending on pressure, the number and size of vents, geometry of the flowpath, etc.

In a further embodiment, the side wall may comprise a second side wall. The second side wall may be configured such that there is a second side opening between the outer rim and the wall section when part of the outer rim connects to the wall section. In an embodiment, the second side opening is defined in addition to the bottom opening and the first side opening. The additional openings provide further control over the exhaust gas flow and further spaces to flow or vent gas when needed.

In a battery enclosure, the arrangement of the one or more modules may be optimally positioned to achieve a relatively small form factor of the overall battery enclosure. This is desired as the battery enclosure is configured to fit or integrated (along with other components) optimally within the hood of a vehicle. As a result of this, the position of the modules in the battery enclosure may not always be symmetric. In such embodiments, the modules may (also) not be symmetrically placed relative to the position of the vent. As a consequence, the exhaust gas flow from different parts within the battery enclosure may be different. Therefore, one side of the side wall may be impacted by a relatively larger number of particles compared to another side. Hence, it may be desired to have a relatively smaller or larger opening on one side of the baffle plate compared to another side of the baffle plate. Therefore, the position and the opening area of the first side opening, the second side opening and the bottom opening may be varied in dependence of the flow conditions within the battery enclosure. Such a baffle plate allows for flexibility in the relative sizes and placements of openings to work with the flow and configuration of different battery enclosures and module placements.

In some embodiments, the opening(s) are such that the area of the bottom opening is larger than the sum of the areas of the first side opening and the second side opening. That is, it may apply that A₁>2*(A_{S1} + A_{S2}), preferably A₁>2.5*(A_{S1} + A_{S2}), more preferably A₁>5*(A_{S1} + A_{S2}). In this way, the bulk of the exhaust gas flow is still directed to the vent via the bottom opening. The bottom opening remains the preferred opening (compared to all other openings) for expelling the exhaust gas flow as the turbulent exhaust gas has to perform work to carry particles against gravity, causing particles to settle out of the exhaust flow. This increases the weight percentage of the particles separated from the exhaust gas directed towards the vent, keeping them contained within the battery enclosure.

According to an embodiment, the baffle plate material is one or more of metallic, rubber and plastic, or a combination thereof. As mentioned above, the baffle plate obstructs the flow of the exhaust gas to the vent. During operation of the battery, particles can impinge or impact the surface of the baffle plate, which can result in significant erosion and pitting of the surface of the baffle plate. Furthermore, the particles may impact the baffle plate at an elevated temperature, in some instances, as high as 1000 °C. The use of metallic and/or plastic materials for the baffle plate provides sufficient toughness and thermal resistance. Here, the term "toughness" is a measure of a material's ability to absorb energy and deform without fracturing when subjected to sudden or impact loading.

Further, at least 90 wt. % of the baffle plate may be manufactured using a baffle plate material. In further embodiments, the baffle plate may be completely formed of the baffle plate material. In an embodiment, the baffle plate material may be selected from the group of steel, stainless steel, titanium, nickel-based alloys like Hastelloy, Waspaloy, and Nimonic, cobalt-based alloys such as Stellite, and tungsten alloys. For example, the baffle plate material may be body sheet metal (e.g., VDA 239-CR4 coated ZM59/50. These metals may be preferred on account of their high toughness and high thermal resistance. Additionally, in embodiments, the baffle plate material may be selected from the group of Polyetheretherketone (PEEK), Polyphenylene Sulfide (PPS), Polyimides (e.g., Kapton), and Polyetherimide (PEI or Ultem). Such thermoplastics also provide a combination of high toughness and high thermal resistance. Of course, it will be apparent to the skilled person that the baffle plate may also be manufactured from a combination of the aforementioned materials. For example, the back plate may comprise stainless steel and the side wall may comprise PPS. While these materials may be preferred, the baffle plate is not limited to the aforementioned materials. In further embodiments, a coating may be applied on the baffle plate material to improve the thermal resistivity of the baffle plate.

In an embodiment, the back plate and/or the outer rim may comprise one or more means of connecting the baffle plate to the wall section. In embodiments, the baffle plate may be attached to the wall section by means of screws, bolts, clips or other connection means. In such embodiments, the fixing holes (e.g., screw holes) may be configured on the back plate, or on the side wall or along the outer rim, or a combination thereof and thereby securing the baffle plate to the wall section by means of screws. In some embodiments, the baffle plate may also be connected to the wall section by means of rivets. Here, the rivets may comprise features extending in a perpendicular direction away from the baffle plate towards the wall section to facilitate riveting the baffle plate to the wall section. Alternatively, in an embodiment, the outer rim may be welded or adhered to the wall section, or the back plate may have an (additional) protruding element that is welded to the wall section. Here, the protruding element may extend away in a perpendicular direction from the back plate towards the wall section to facilitate welding the back plate to the wall section. Yet further, the baffle plate may be attached to the wall section by means of a snap-fit connection. A snap-fit connection comprises complementary interlocking elements where one element of the snap-fit connection may be connected with another element of the snap-fit connection by partial deformation of at least one of the said elements. Screws, rivets, bolts, snap-fit connections and other related fastening means could be used to facilitate connecting the baffle plate to the wall section. Connecting the baffle plate to the wall section could be done using a plurality of such connectors. In a further embodiment, the baffle plate may also be formed or cast as a part of the wall section such that the baffle plate and the wall section are a monolith.

In some embodiments of the baffle plate, the back plate may comprise perforations or mesh openings to help increase the amount of exhaust gas which can be flowed out but also limit the exit of particles. The mesh openings may be integrated with the baffle plate such that the mesh openings are created in the baffle plate during the manufacturing process. Alternatively, a separate mesh (comprising perforations) may be assembled with the baffle plate such that the mesh is positioned covering a predefined opening in the baffle plate. The size of the mesh openings may be selected in view of the average size of the particles carried by the exhaust gas. In further embodiments, the shape of the mesh openings or pores may be varied. The back plate may have mesh openings with a circular equivalent diameter C₁ selected from the range of 0.1-1.2.mm, preferably 0.3-1.0 mm, more preferably 0.5-0.8 mm. The mesh openings may be square, circular, rectangular, or any other arbitrary shape. The diameter of said shape is defined using a circular equivalent diameter, which is the diameter of a circle with the same cross-sectional area as any given mesh opening.

In a further aspect, a gas exhausting arrangement for a battery enclosure is provided. The gas exhausting arrangement comprises a vent located on a wall section of the battery enclosure and the baffle plate connected to the wall section. Such a battery enclosure facilitates: (i) expelling the exhaust gas at a sufficiently high mass flow rate to avoid pressure buildup within the battery enclosure, and (ii) prevents clogging or damage to the vent due to the hot particles carried by the exhaust gas.

It is reiterated here that the flow of the exhaust gas is not defined only by the baffle plate in isolation, but a combination of the baffle plate, the vent opening area, the type of vent and the wall section. By controlling the aforementioned elements, the exhaust gas may be safely expelled from the battery enclosure without damage to the battery enclosure or the other elements in the vehicle positioned in close proximity to the battery enclosure. Furthermore, vents may comprise a rupture disc (or pressure safety disc) which is a device used to protect equipment or systems from overpressure. The rupture disc is designed to rupture or burst relieving excess pressure and preventing damage to the battery. The area surrounding the rupture disc, where pressure is released when the disc ruptures, needs to be clear of obstructions or impediments to the flow of exhaust gas. The baffle plate facilitates preventing the rupture disc area from getting clogged by the particles in the exhaust gas.

The particles carried by the exhaust gas may not be uniform (or homogenous) in size, rather the particles may have a range of shapes and sizes. Further, it may not be possible to obstruct all particles in the flow from accessing the vent. Particularly, lighter particles may be carried more easily by the exhaust gas flow as the gravitational resistance to the flow offered by such particles is significantly lower compared to heavier particles. Therefore, while the relatively heavier particles may be separated from the flow, some of the lighter particles may still be carried by the exhaust gas past the baffle plate to the vent. Hence, in an embodiment, the gas exhausting arrangement may (additionally) comprise a particle filter covering the vent. In this way, the relatively lighter particles carried by the exhaust gas are not expelled to the exterior of the battery enclosure. The particle filter in combination with the baffle plate further improves the ability of the gas exhausting arrangement to limit relatively hot particles from being expelled to the exterior of the battery enclosure, without substantially limiting the mass flow rate of the exhaust gas.

As mentioned above, the wall section also has an impact on defining the exit flow geometry. That is, the wall section may also facilitate directing the flow of the exhaust gas towards the vent. Hence, in an embodiment, the wall section may comprise rib elements configured to direct the flow of the exhaust gas. Rib elements may be substantially planar, that is, the rib elements have a relatively small thickness compared to the width and the height of said rib element. Further, the rib element may be positioned in the vicinity of the one or more openings defined by the outer rim and the wall section. The orientation of the rib element may be selected depending on the flow conditions (or desired flow conditions) at the opening. For instance, vertically oriented rib elements along the bottom opening may facilitate providing a diffuser effect, accelerating the flow towards the vent. Alternatively, horizontally oriented rib elements may further obstruct the flow at the bottom opening and provide a barrier to particles still carried by the flow. Furthermore, the tilt of the rib elements (measured relative to the back plate) may be varied to control the extent to which the flow is obstructed. Hence, by controlling the shape, size, orientation and relative tilt of the rib elements to the back plate, significant control may be exercised over the flow of the exhaust gas and/or facilitate the separation of particles from the exhaust gas. Additionally, the rib elements may also be used to improve the structural integrity of the wall section (while using a limited amount of material).

In a further aspect, a battery enclosure comprising one or more gas exhausting arrangements is provided. As mentioned above, the battery enclosure may comprise a plurality of modules for generating electrical power. Hence, it may be advantageous to use a plurality of gas exhausting arrangements placed within the battery enclosure in dependence of the position of the modules configured within said battery enclosure. For example, the battery enclosure may comprise eight to twenty modules for which the battery enclosure may comprise three gas exhausting arrangements to expel the exhaust gas from the said modules. For example, the battery enclosure may comprise two gas exhausting arrangements on one side and another gas exhausting arrangement on the opposite side of the battery enclosure. It will be apparent to the skilled person to suitably position the gas exhausting arrangements within the battery enclosure to expel the exhaust gas from the battery enclosure.

In a further aspect, a vehicle comprising the (above-mentioned) battery enclosure is provided. Vehicle, in this context is not limited only to cars, buses, motorbikes, etc. The term vehicle further includes boats, airplanes, trains and spacecrafts. While the battery enclosure is explained as for use in a vehicle, it is in no way limited from being used in another context involving a battery.

In a further aspect, a method of removing exhaust gas using the gas exhausting arrangement is provided. The method comprises expelling the exhaust gas from one or more modules (or "battery units") in the battery enclosure. Further, the method comprises directing the flow of exhaust gas through the opening. Here, the battery enclosure may be designed such that the vents are located in regions within the battery enclosure where the mass flow rate of the exhaust gas may be maximised. Additionally, the battery enclosure may be designed with features, for example rib elements, to direct (or control) the flow of gas within the battery enclosure. Yet further, the exit flow geometry in the vicinity of the vent may be controlled by the choice of design of the baffle plate in dependence of geometry of the wall section.

The method may comprise directing the flow of exhaust gas through the plurality of gas exhausting arrangements. Yet further, the method may comprise directing the flow of the exhaust gas around at least one side of the baffle plate. That is, the method may comprise directing the flow of exhaust gas via a first side opening and/or directing the flow of exhaust gas via a second side opening. In further embodiments, the method comprises directing the flow of exhaust gas through the one or more openings defined by the outer rim of the baffle plate and the wall section. Finally, the method may comprise exhausting the exhaust gas via the vent. In this way, the method may provide the benefit of expelling exhaust gas from the battery enclosure at a suitable mass flow rate to prevent a build-up of excess exhaust gas within the battery enclosure. Additionally, the method may provide the benefit of separating (hot) particles carried by the exhaust gas from being expelled to the exterior of the battery enclosure and preventing damage to the vents configured on the walls of the battery enclosure.

### BRIEF DESCRIPTION OF DRAWINGS

Embodiments will now be described, by way of example only, with reference to the accompanying schematic drawings in which corresponding reference symbols indicate corresponding parts.
Fig. 1 schematically depicts an embodiment of a baffle plate for controlling fluid flow through a vent located on a wall section;
Fig. 2A-2D schematically depict further embodiments of a baffle plate;
Fig. 3 schematically depicts an embodiment of a battery enclosure; and
Fig. 4A-4B depict a flow visualization of streamlines of exhaust gas within a battery enclosure.

The depicted figures are schematic representations of some embodiments of the invention, and do not serve as restriction of the scope or the protection laid down by the claims. The figures are intended to provide an illustration only, and are not necessarily to scale.

### DETAILED DESCRIPTION OF DRAWINGS

The following is a description of certain embodiments, given by way of example only and with reference to the figures.

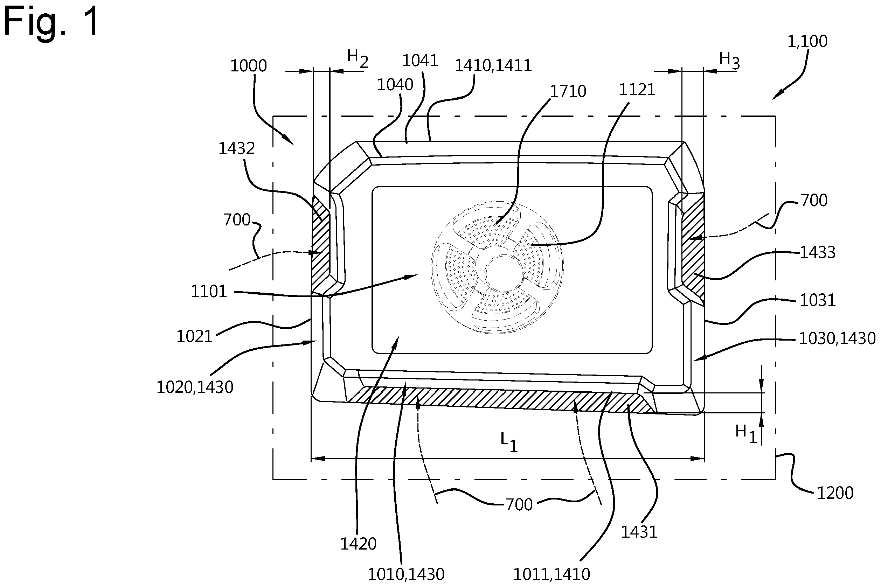

Fig. 1 schematically depicts an embodiment of a baffle plate 1000 for controlling fluid flow through a vent 1101 located on a wall section 1200. Here, the baffle plate 1000 is connected to the wall section 1200 of a battery enclosure 1. The vent 1101 is configured on the (vertical) wall section 1200 for exhausting (or expelling) exhaust gas 700 generated during the operation of the battery 100. In this context, fluid flow refers to the flow of the exhaust gas 700 (indicated with dashed lines). The baffle plate 1000 is positioned such that it surrounds the vent 1101. The baffle plate 1000 comprises a back plate 1420. Further, the baffle plate 1000 comprises a side wall 1430 extending in a substantially perpendicular direction away from the back plate 1420. The side wall 1430 extends from the back plate 1420 to a top side, a left side, a right side and a bottom side (when viewed from the vertical orientation of the baffle plate 1000). The portion of the side wall 1430 on the top side, the left side, the right side and the bottom side are referred to as a top side wall 1040, a first side wall 1020, a second side wall 1030 and a bottom wall 1010, respectively. The outer rim 1410 is at a distal portion 1411 of the side wall 1430 and in this embodiment marks the boundary of the baffle plate 1000. The baffle plate 1000 is substantially thin, meaning that the thickness of the baffle plate 1000 is substantially smaller than the length or the width of the baffle plate 1000. In this embodiment, the back plate 1420 of the baffle plate 1000 is relatively flat and is arranged substantially parallel to the surface containing the vent opening 1121. The side wall 1430 extends away from the back plate 1420 towards the wall section 1200 in a substantially perpendicular direction to the baffle plate 1000. Here, the side wall 1430 does not form a sharp corner with the back plate 1420, rather the common side of the side wall 1430 and the back plate 1420 is beveled (or rounded).

The baffle plate 1000 is arranged to surround the vent 1101. Further, in the depicted embodiment, the bottom wall 1010 is configured such that there is a bottom opening 1431 between the outer rim 1410 and the wall section 1200 when part of the outer rim 1410 connects to the wall section 1200. Likewise, the first side wall 1020 is configured such that there is a first side opening 1432 defined between the outer rim 1410 and the wall section 1200 when part of the outer rim 1410 connects to the wall section 1200. Analogously, the second side wall 1030 is configured such that there is a second side opening 1433 defined between the outer rim 1410 and the wall section 1200 when part of the outer rim 1410 connects to the wall section 1200. In this way, access to the vent 1101 is generally blocked except via the bottom opening 1431, the first side opening 1432 and the second side opening 1433. In this way, the exhaust gas 700 is forced to flow around the baffle plate 1000 to access the vent 1101, resulting in the separation of a significant weight percentage of particles from the exhaust gas flow.

Here, the bottom opening 1431 is defined by the parameter H₁ which is the maximum height of the bottom opening 1431 measured in a perpendicular direction from a plane containing the vent opening 1121. The maximum height of the first side opening 1432 and the second side opening 1433 are H₂ and H₃, where said measurements are made in a perpendicular direction from the plane containing the vent opening 1121. Further, the maximum length L₁ of the baffle plate 1000 is measured in a direction parallel to the plane containing the vent opening 1121. The opening heights H₁, H₂, etc. may be defined in relation to the maximum length of the baffle plate 1000. In addition to the height of the openings 1431,1432,1433, said openings are also defined by their respective opening areas. The openings are generally defined by the part of the outer rim 1410 and the wall section 1200. Here, the bottom opening 1431, the first side opening 1432 and the second side opening 1433 have an area A₁, A_{S1} and A_{S2}, respectively. In this embodiment, the area of the bottom opening 1431 is at least two times larger than the (individual) areas of the first opening 1432 and the second side opening 1433, respectively. Furthermore, in this embodiment, the area of the bottom opening 1431 also is more than twice the total area of the first side opening and the second side opening. That is, A₁ > A_{S1}, A₁ > A_{S2} and A₁ > (A_{S1}+ A_{S2}).

With such relative areas, the majority of the exhaust gas 700 is directed through the bottom opening 1431 as opposed to the first side opening 1432 or the second side opening 1433. This forces the bulk of the exhaust gas 700 to access the vent 1101 from a direction against gravity. As a result, the exhaust gas 700 expends energy in overcoming the gravitational force acting on the particles, resulting in a significant weight percentage of particles separating out of the exhaust gas 700 and settling on the bottom of the battery enclosure 1. Depending on the direction of the flow, it is beneficial to have a majority of the flow from the bottom and also a larger flow area to lower flow speed. Further, the other openings also facilitate redirecting the flow as opposed to directly accessing the vent.

In the depicted embodiment, the vent 1101 is a pressure valve. Pressure valves (or rupture discs) work on the principle of a pressure differential. The valve is opened when the pressure within the battery enclosure 1 exceeds the pressure outside the battery enclosure 1 by a predetermined value. The excess pressure required to configure the pressure valve opening may be controlled, for example, by spring loading the pressure valve. Other types of pressure valves or other valves may also be used. For instance, in other embodiments, the pressure valve may be a diaphragm valve. Such a pressure valve may comprise a rubber (or plastic or silicone) membrane that uses the flexibility of the membrane to regulate fluid flow depending on the pressure changes. As the pressure within the battery enclosure increases, the diaphragm may twist to regulate the flow of fluid and thereby the pressure. Additionally, in this embodiment, a particle filter 1710 is positioned at the vent opening 1121. The particle filter 1710 facilitates removing/filtering any light particles that are yet carried by the exhaust gas 700.

The wall section 1200, the baffle plate 1000, especially the bottom opening 1431, the first side opening 1432, and the second side opening 1433 define the exit flow geometry. The aforementioned features facilitate controlling the flow of exhaust gas 700 via the vent 1101. As discussed in the background, prior art systems generally used a filter covering the vent opening 1121. However, with new developments in battery chemistry there is a need to protect the vent 1101 from hot particles that may damage or clog the vent 1101 during operation of the battery. The baffle plate 1000 provides the advantage of separating the hot particles in the exhaust gas 700 at a location away from the vent opening 1121. Furthermore, said separation of particles is achieved without significantly limiting the mass flow rate of the exhaust gas 700 expelled via the vent 1101, thereby reducing the risk of clogging the vent 1101.

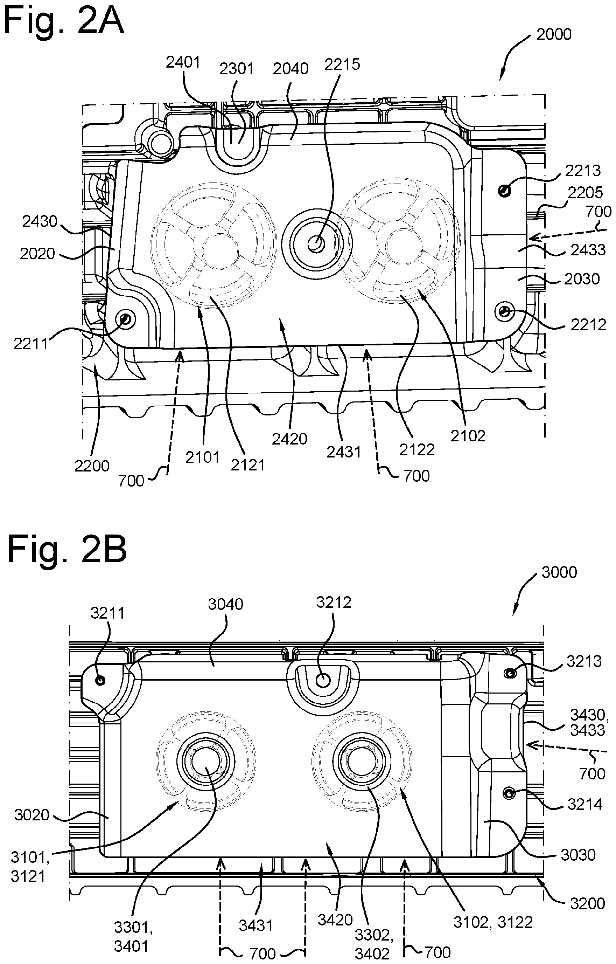

Fig. 2A-2D schematically depict further embodiments of the baffle plate 2000. Fig. 2A depicts a front view of an embodiment of the baffle plate 2000. In this embodiment, the baffle plate 2000 is mounted vertically on the wall section 2200 and surrounds a first vent 2101 and a second vent 2102. The baffle plate 2000 is designed such that the left portion of the back plate 2420 surrounds a first vent 2101 (and a first vent opening 2121), and the right portion of the back plate 2420 surrounds a second vent 2102 (and a second vent opening 2122). In this embodiment, the side wall 2430 extends from the back plate 2420 on the top side to a top side wall 2040. On the left side, the back plate 2420 extends to a first side wall 2020, and on the right side, the back plate 2420 extends to a second side wall 2030. The side wall 2430 in this embodiment does not extend at the bottom side.

The baffle plate 2000 has two openings, the bottom opening 2431 and the second side opening 2433. The top side wall 2040 curves towards the wall section 2200 and limits (or blocks) the exhaust gas 700 from accessing the vent 2101 via the top of the baffle plate 2000. Likewise, the left side wall 2020 curves towards the wall section 2200 and limits (or blocks) the exhaust gas 700 from accessing the vent 2101. Further, there is no bottom side wall in this embodiment. Rather, the bottom opening 2431 spans most or all of the back plate 2420 on the bottom side. The exhaust gas 700 accesses the first vent 2101 and the second vent 2102 from the aforementioned openings 2431, 2433. As can be seen from the figure, the bottom opening 2431 is significantly larger than the second side opening 2433.

Further, the baffle plate 2000 is connected to the wall section 2200 by connecting means (not shown). In this embodiment, the connecting means are screws. Here, the baffle plate 2000 comprises a bottom left screw hole 2211, a bottom right screw hole 2212, top right screw hole 2213 and a central screw hole 2215. The screw holes facilitate connecting the baffle plate 2000 to the wall section 2200 using screws. Additionally, the baffle plate 2000 comprises a spacer element, especially a top left spacer element 2301. In the embodiment shown, the top left spacer element 2301 is a protrusion (or boss) 2401 on the back plate 2420 and/or the side wall 2430 in a perpendicular direction away from the vent opening 2121. The spacer element 2301 helps to facilitate positioning the baffle plate 2000 at a desired location on the wall section 2200. Moreover, the spacer element 2301 is particularly advantageous in supporting the baffle plate 2000 during operation when the battery 100 may be subjected to significant vibrational load. In other embodiments, as an alternative to screw holes, the baffle plate 2000 may comprise clip holes for securing the baffle plate 2000 in position by means of clips or cables.

Additionally, as shown in the Fig. 2A, the wall section 2200 comprises rib elements 2205. The rib elements 2205 in this embodiment help to provide structural stability to the wall section 2200. Additionally, the rib elements 2205 can also help facilitate shaping the wall section 2200 in the vicinity of the vents 2101, 2102. In this way, the wall section 2200 in combination with the baffle plate 2000 define the exit flow geometry and thereby control the flow of exhaust gas 700 in the vicinity of the vents 2101, 2102.

Fig. 2B schematically depicts another embodiment of the baffle plate 3000. In this embodiment, the back plate 3420 surrounds the first vent 3101 and the second vent 3102. The side wall 3430 extends from the back plate 3420 to the top side, the left side and the right side. In this embodiment, the left side wall 3020 extends towards the wall section 3200 limiting the flow of exhaust gas 700 on the left side of the baffle plate 3000. On the right side, the right side wall 3030 and the wall section 3200 define the second side opening 3433. The opening 3431 at the bottom of the baffle plate 3000 is relatively large compared to the second side opening 3433. In this specific embodiment, the back plate 3420 is about 11 cm in height and about 22 cm in length (i.e., L₁ = 22 cm). The gap between the baffle plate 3000 and the vent 3101 is about H₂ = 5.0-8.5 mm at the side wall 3430 and the distance to the back plate 3420 is about H₁ = 10 mm.

The baffle plate 3000 is connected to the wall section 3200 by connecting means 3210. The baffle plate 3000 has a top left screw hole 3211, a top center screw hole 3212, a top right screw hole 3213 and a right center screw hole 3214. Additionally, there are two protrusions 3401, 3402 (protruding in a perpendicular direction from the plane of the vent openings 3121, 3122) from the center of the first vent 3101 and the second vent 3102. The protrusions 3401,3402 house two pressure operated exhaust valves (or mechanical spring loaded push valves) which are about 6.0-8.0 cm in diameter. Note that a part of the protrusion extends into the vent 3101. Here, the back plate 3420 has a first spacer element 3301 and a second spacer element 3302 that protrude in a perpendicular direction away from the plane containing the vent opening 3121. The spacer elements 3301, 3302 facilitate accommodating the aforementioned protrusions 3401, 3402 and thereby, facilitate positioning the baffle plate 3000 when connecting the baffle plate 3000 to the wall section 3200.

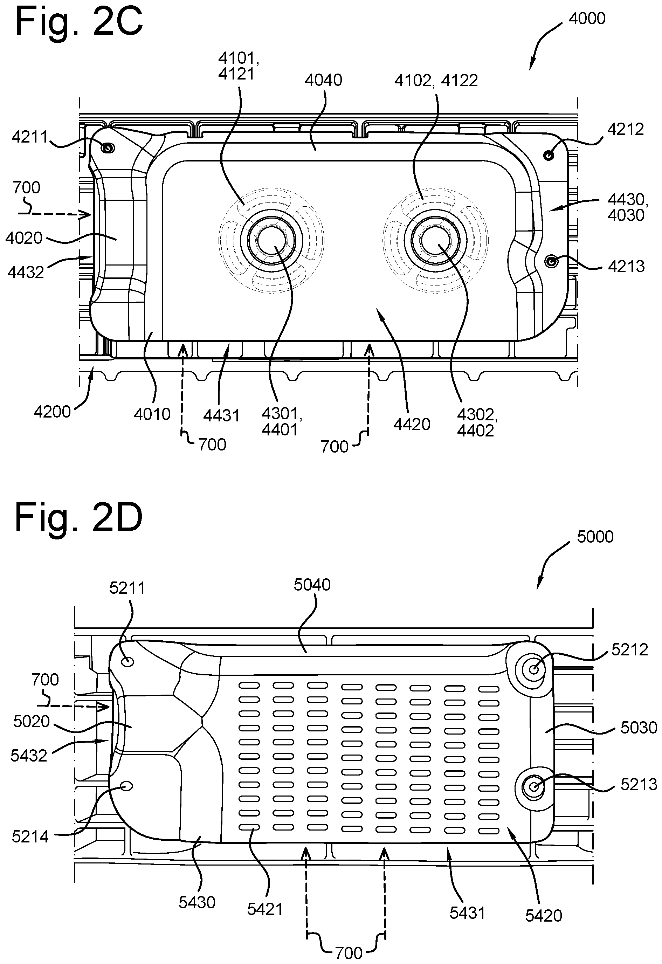

Fig. 2C schematically depicts yet another embodiment of the baffle plate 4000. In this embodiment, the back plate 4420 surrounds the first vent 4101 and the second vent 4102. The side wall 4430 extends from the back plate 4420 to the top side, the left side and the right side. In this embodiment, the top side wall 4040 extends towards the wall section 4200 limiting the flow of exhaust gas 700 at the top of the baffle plate 4000. On the left, there is the first side opening 4432. Here, the side wall 4430 does not extend at the bottom side of the back plate 4420. At the bottom side of the back plate 4420 the (bottom) opening 4431 is defined. Analogous to the embodiments shown in Fig. 2A and 2B, the opening 4431 at the bottom of the baffle plate 4000 is relatively large compared to the first side opening 4432.

The baffle plate 4000 is connected to the wall section 4200 by connecting means 4210. The baffle plate 4000 has a top left screw hole 4211, a top right screw hole 4212 and a right center screw hole 4213. Furthermore, in this embodiment, there are two protrusions 4401, 4402 (protruding in a perpendicular direction from the plane of the vent openings 4121, 4122) from the center of the first vent 4101 and the second vent 4102. Here, the back plate 4420 has a first spacer element 4301 and a second spacer element 4302 that protrude in a perpendicular direction away from the plane containing the vent opening 4121. The spacer elements 4301, 4302 facilitate accommodating the aforementioned protrusions and thereby, facilitate positioning and supporting the baffle plate 4000 when connecting the baffle plate 4000 to the wall section 4200. In further embodiments, the baffle plate 4000 may comprise slotted holes to guide the baffle plate 4000 into position.

Fig. 2D schematically depicts yet another embodiment of the baffle plate 5000. Features that are common to the other embodiments discussed in Fig. 2A-2C are not repeated for the sake of brevity. In this embodiment, the back plate 5420 of the baffle plate 5000 comprises a plurality of mesh openings 5421. The mesh openings 5421 each individually have a circular equivalent diameter C₁. In the figure, the mesh openings 5421 are depicted as rectangular slits. Of course, in other embodiments, the mesh openings 5421 may also have other shapes. The mesh openings 5421 act like a prefilter to separate particles with a diameter larger than C₁. In this way, some of the particles may be separated at the back plate 5420, while still allowing a part of the exhaust gas 700 to access the vent 5101 via the back plate 5420.

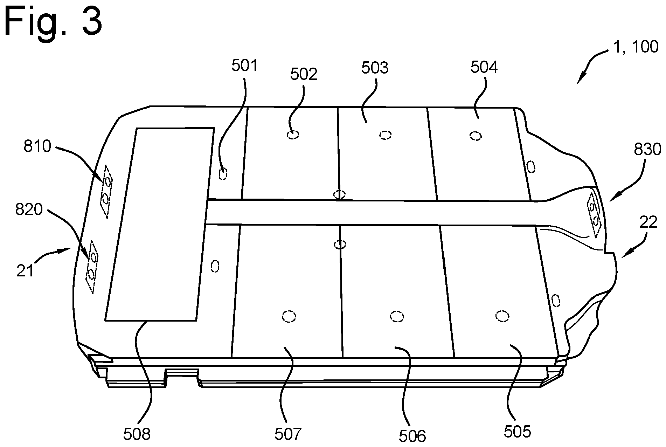

Fig. 3 schematically depicts an embodiment of the battery enclosure 1. The battery 100 comprises the battery enclosure 1, the one or more gas exhausting arrangements 810, 820, 830 and the one or more modules 501-508 within the battery enclosure 1. The battery 100 may typically be placed inside the trunk or the hood of a vehicle, such as an automobile. In this embodiment, the battery enclosure 1 houses eight modules 501, 502, 503, 504, 505, 506, 507, 508. In some embodiments, battery modules may have increased Nickel content, which can generate gases with hot particles that are ejected from the said modules. Such a battery enclosure 1 can be in a vehicle, for example, an electric automobile.

In the embodiment shown in Fig. 3, there are three gas exhausting arrangements. Note that the three gas exhausting arrangements 810, 820, 830 comprise a baffle plate each covering two vents (i.e., 6 vents), though other embodiments could differ with a baffle covering one vent or more than 2 vents. A first gas exhausting arrangement 810 and a second gas exhausting arrangement 820 are configured on a back side 21 of the battery enclosure 1, and a third gas exhausting arrangement 830 is configured on a front side 22 of the battery enclosure 1. The flow inside the battery enclosure 1 is typically turbulent. The gas exhausting arrangements 810, 820, 830 facilitate expelling the exhaust gas 700 and separating the hot particles from the exhaust gas 700 without damaging the one or more valves (or vents) in the gas exhausting arrangements 810, 820, 830. In this way, such a battery enclosure 1 comprising the gas exhausting arrangements 810, 820, 830 facilitates ejecting the exhaust gas 700 by controlling the flow within the battery enclosure 1. This helps to reduce or prevent damage to the one or more vents of the gas exhausting arrangements 810, 820, 830. Furthermore, the hot particles in the exhaust gas 700 are separated by means of the baffle plate 1000 comprised by the one or more gas exhausting arrangements 810, 820, 830.

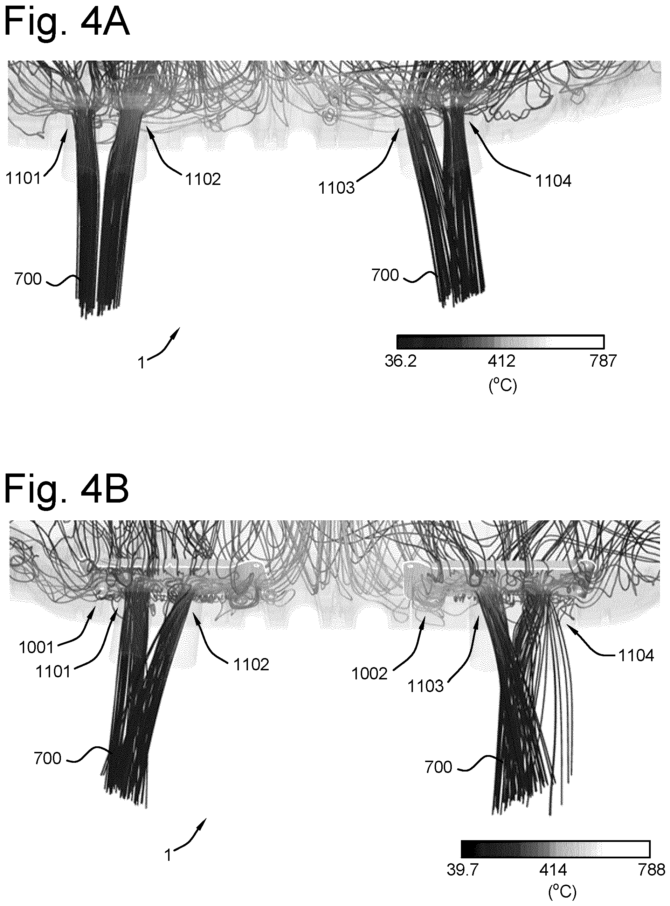

Fig. 4A-4B depicts a flow visualization of the streamlines of the exhaust gas 700 within the battery enclosure 1. Fig. 4A shows a flow visualization of the flow of exhaust gas 700 in a battery enclosure 1 where a baffle plate is not used. In contrast, Fig. 4B shows a flow visualization of the flow of exhaust gas 700 in a battery enclosure 1 where the baffle plate 1000 is configured upstream of the vents 1101-1104. In Fig. 4B, a first baffle plate 1001 is configured upstream of the vents 1101,1102 and a second baffle plate 1002 is configured upstream of the vents 1103,1104. Here, a streamline refers to a line that represents the path of a fluid as it moves through the flow field, with the tangent to the line at any point indicating the direction of the fluid velocity at that point. In both figures, it can be observed that the exhaust gas 700 eventually exits the battery enclosure 1 via the one or more vents 1101, 1102, 1103, 1104. Furthermore, the streamlines are colored by the temperature of the exhaust gas 700.

In Fig. 4A, the flow from either the left side and the right side of the battery enclosure are relatively cooler with temperatures of about 40 °C. The exhaust gas 700 accessing the vents 1101-1104 from the center of the battery enclosure 1 are relatively hotter having a temperature of about 450 °C. In Fig. 4A the relatively hot streamlines from the middle directly contact the vents 1102, 1103 (located closest to the middle of the battery enclosure 1), indicating that any hot particle in the exhaust gas 700 would contact the said vents 1102, 1103, potentially causing damage. In contrast, in Fig. 4B, the baffle plates 1001, 1002 limit accessibility to the vents 1101-1104. Thus, the high temperature exhaust gas 700 does not have direct access to the vents 1101-1104, but must rather flow around the baffle plates 1001, 1002 to access the vents 1101-1104. In this way, a significant weight percentage of the hot particles carried by the exhaust gas 700 are separated from the exhaust gas 700 by the baffle plate 1000. Here, the particles settle at a location away from the vents 1101-1104, still contained within the battery enclosure 1.

In summary, a baffle plate 1001, 1002 in combination with the wall section 1200 facilitates controlling the flow of exhaust gas 700 in the near vicinity of the vents 1101-1104. Particularly, the exhaust gas 700 is forced to circumnavigate the baffle plate 1001, 1002 and thereby have limited energy to sustain carrying the particles in the exhaust gas 700, leading to the settling of hot particles due to gravity. Furthermore, the baffle plate 1001, 1002 limits damage to the vents by protecting the said vents from direct impact of the particles. This is achieved without adversely limit the mass flow rate of the exhaust gas 700 expelled from the battery enclosure and while simultaneously preventing expelling hot particles carried by the exhaust gas 700 via the vents 1101-1104. Furthermore, the hot particles settle at the bottom of the battery enclosure 1 and dissipate heat over time without causing further damage to any components in the battery enclosure 1 (or external to the battery 100).

The baffle plate has been described with reference to some embodiments. Obvious modifications and alterations will occur to others upon reading and understanding the preceding detailed description. It is intended that the baffle plate be construed as including all such modifications and alterations insofar as they come within the scope of the appended claims.

### REFERENCES

| | |
|---|---|
| Baffle plate | 1000 |
| Back plate | 1420 |
| Side wall | 1430 |
| Bottom wall | 1010 |
| First side wall | 1020 |
| Second side wall | 1030 |
| Top side wall | 1040 |
| Outer rim | 1410 |
| Upper outer rim region | 1041 |
| First outer rim part | 1021 |
| Second outer rim part | 1031 |
| Bottom outer rim part | 1011 |
| Distal portion | 1411 |
| Bottom opening | 1431 |
| First side opening | 1432 |
| Second side opening | 1433 |
| Mesh openings | 1421 |
| Exhaust gas | 700 |
| Wall section | 1200 |
| Connecting means | 1210 |
| Rib element | 1205 |
| Spacer element | 1301,1302 |
| Vent | 1101 |
| Vent opening | 1121,1122 |
| Particle filter | 1710 |
| Gas exhausting arrangement | 800,810,820,830 |
| Battery | 100 |
| Battery enclosure | 1 |
| Module | 501-508 |
| Back side | 21 |
| Front side | 22 |

## Claims

1. A baffle plate (1000) for controlling fluid flow through a vent (1101) located on a wall section (1200), the baffle plate (1000) comprising:
- a back plate (1420);
- a side wall (1430) extending from the back plate (1420) on at least two sides; and
- an outer rim (1410) at a distal portion (1411) of the side wall (1430), wherein the baffle plate (1000) is arranged to connect to the wall section (1200) in such a way that the baffle plate (1000) at least partly covers the vent (1101); and
- wherein the side wall (1430) is configured such that there is an opening (1431) between the outer rim (1410) and the wall section (1200) when a part of the outer rim (1410) connects to the wall section (1200).

2. The baffle plate (1000) according to claim 1, wherein the opening (1431) has a maximum height H₁ measured in a perpendicular direction from a plane containing the opening to the vent (1101), wherein the baffle plate (1000) has a maximum length L₁, wherein H₁ is selected such that as 0.03*L₁ ≤ H₁ ≤ 0.75*L1, preferably H₁ is selected from the range of 10-25 mm.

3. The baffle plate (1000) according to any of claims 1-2, wherein the side wall (1430) further comprises a first side wall (1020), wherein the first side wall (1020) is configured such that there is a first side opening (1432) between the outer rim (1410) and the wall section (1200) when part of the outer rim (1410) connects to the wall section (1200).

4. The baffle plate (1000) according to claim 3, wherein the side wall (1430) further comprises a bottom wall (1010), wherein the bottom wall (1010) is configured such that the opening (1431) is defined between the outer rim (1410) and the wall section (1200), preferably wherein the opening (1431) has an opening area A₁ and the first side opening (1432) has an opening area A_{S1}, wherein A₁ > 2*A_{S1}.

5. The baffle plate (1000) according to claim 4, wherein the side wall (1430) further comprises a second side wall (1030), wherein the second side wall (1030) is configured such that there is a second side opening (1433) between the outer rim (1410) and the wall section (1200) when part of the outer rim (1410) connects to the wall section (1200), preferably the second side opening (1433) has an opening area A_{S2}, wherein A₁>2*(A_{S1} + A_{S2}).

6. The baffle plate (1000) according to any of claims 1-5, wherein the baffle plate (1000) is metallic and/or plastic.

7. The baffle plate (1000) according to any of claims 1-6, wherein the back plate (1420) and/or the outer rim (1410) comprises one or more means for connecting the baffle plate (1000) to the wall section (1200).

8. The baffle plate (1000) according to any one of the preceding claims, wherein the back plate (1420) has mesh openings (1421) with a circular equivalent diameter (C₁) selected from the range of 0.3-1.0 mm.

9. A gas exhausting arrangement (800) for a battery enclosure (1) comprising a vent (1101) located on a wall section (1200) of the battery enclosure (1) and the baffle plate (1000) according to any one of the claims 1-8 connected to the wall section (1200) around the vent (1101).

10. The gas exhausting arrangement (800) according to claim 9, further comprising a particle filter (1710) covering the vent (1101).

11. The gas exhausting arrangement (800) according to any one of claims 9-10, wherein the wall section (1200) comprises rib elements (1205) configured to direct a flow of fluid.

12. A battery enclosure (1) comprising one or more gas exhausting arrangements (800) according to any one of claims 9-11.

13. A vehicle (500) comprising the battery enclosure (1) according to claim 12.

14. A method (50) of removing exhaust gas (700) using the gas exhausting arrangement (800) according to any one of claims 9-11, comprising: (i) expelling exhaust gas (700) from one or more battery units in the battery enclosure (1); (ii) directing the flow of exhaust gas (700) through the opening (1431); and (iii) exhausting the exhaust gas (700) via the vent (1101).

15. The method (50) according to claim 14, further comprising directing flow of the exhaust gas (700) around at least one side of the baffle plate (1000).
